# EUROPEAN PATENT SPECIFICATION

(11) **EP 3 490 079 B1**
(45) Date of publication and mention of the grant of the patent: **21.10.2020**
(21) Application number: 18208697.5
(22) Date of filing: 27.11.2018
(51) Int. Cl.: H01R 13/58, H01R 13/59, H02G 3/06, H02G 15/08, H02G 15/103

(54) **ELECTRICAL PLUG CONNECTOR WITH A CLAMPING MECHANISM AND ELECTRICAL CABLE ASSEMBLY WITH A PLUG CONNECTOR HAVING A CLAMPING MECHANISM**
ELEKTRISCHER STECKVERBINDER MIT KLEMMMECHANISMUS UND ELEKTRISCHE KABELANORDNUNG MIT EINEM STECKVERBINDER MIT KLEMMMECHANISMUS
CONNECTEUR ÉLECTRIQUE COMPORTANT UN MÉCANISME DE SERRAGE ET ENSEMBLE DE CÂBLE ÉLECTRIQUE AYANT UN CONNECTEUR POURVU D'UN MÉCANISME DE SERRAGE

(30) Priority: 27.11.2017 IT 201700135983
(43) Date of publication of application: 29.05.2019
(73) Proprietor: Icotronix GmbH, 94330 Aiterhofen (DE)
(72) Inventor: REIMANN, Jürgen, 94330 AITERHOFEN (DE); KUFNER, Sonja, 94530 AUERBACH (DE)
(74) Representative: Seeger, Heiko

(56) References cited:
- CN-U- 206 585 140

## Description

### CROSS-REFERENCE TO RELATED APPLICATIONS

This patent application claims priority from Italian patent application no. 102017000135983 filed on 27/11/2017.

### TECHNICAL FIELD

The present invention refers to an electrical plug connector having a clamping portion for securing an electrical cable within the electrical plug connector.

Preferentially, the present invention also refers to an electrical cable assembly having an electrical cable and an electrical plug connector having a clamping portion securing the electrical cable within the electrical plug connector.

### BACKGROUND ART

Electrical cable assemblies comprising an electrical plug connector and an electrical cable secured at a first end portion of the cable to the electrical plug connector are known in the art for electrically connecting machine components with one another.

In a typical solution the cable assembly is connected through the electrical plug connector to an electrical socket connector, which again is connected to a respective machine component such as an electrical motor. The cable again is connected at its second end portion opposite to the first end portion to another machine component, such as a power source.

A typical electrical plug connector comprises a clamp portion for securing the electrical cable within the electrical plug connector.

A common clamp portion comprises a clamp housing for receiving the electrical cable, a clamp ring, which is configured to be in a receiving configuration for allowing the electrical cable to be inserted into the clamp housing and a clamping configuration at which the clamp ring secures the electrical cable within the housing. The clamp portion further comprises an actuation ring configured to control the clamp ring between the receiving configuration and the clamping configuration upon the selective exertion of a force onto the clamp ring itself. In order to control the force acting on the clamp ring the actuation ring is provided with typically two grooves and the housing is provided with typically two pins protruding away from an outer surface of the housing. The grooves and the pins define a Bayonet locking device for removably guiding the actuation ring between a rest position at which it controls the clamp ring into the receiving configuration and an operative position at which it exerts the necessary force so as to control the clamp ring into the clamping configuration.

A drawback of such an electrical plug connector is that the grooves provided on the actuation ring allow contaminations to migrate into the electrical plug connector. This is in particular critical in the cases in which the electrical plug connector is installed within areas exposed to aggressive gases and similar.

A further drawback is seen in that the actuation ring can be controlled between the operative position and the rest position also by non-authorized persons.

Utility model CN206585140U discloses an electrical plug connector comprising:
- a clamp portion extending along a longitudinal axis and being arranged at a first end of the electrical plug connector for receiving and clamping an electrical cable;
wherein the clamp portion comprises:
- a clamp housing delimiting an inner space for receiving the electrical cable;
- a clamp ring being controllable between a receiving configuration at which the clamp portion is adapted to receive the electrical cable and a clamping configuration at which the clamp ring is configured to exert a clamping force on the electrical cable;
- an actuation ring coupled to the clamp housing and configured to control the clamp ring between the receiving configuration and the clamping configuration; and
- a bayonet locking device associated to the clamp housing and the actuation ring and configured to secure the actuation ring on the clamp housing.

### DISCLOSURE OF INVENTION

It is therefore an object of the present invention to provide an electrical plug connector to overcome, in a straightforward and low-cost manner, at least one of the aforementioned drawbacks.

It is therefore a further object of the present invention to provide a cable assembly to overcome, in a straightforward and low-cost manner, at least one of the aforementioned drawbacks.

According to the present invention, there is provided an electrical plug connector as claimed in claim 1.

According to another aspect of the present invention, there is provided a cable assembly as claimed in claim 10.

Further preferred embodiments are claimed in the dependent claims.

### BRIEF DESCRIPTION OF THE DRAWINGS

A non-limiting embodiment of the present invention will be described by way of example with reference to the accompanying drawings, in which:
Figure 1 is a perspective view of a portion of a machine comprising an electrical cable assembly having an electrical plug connector, with parts removed for clarity;
Figure 2 is a perspective view of the cable assembly of Figure 1, with parts removed for clarity;
Figure 3 is an enlarged perspective view of the electrical plug connector of Figures 1 and 2, with parts removed for clarity;
Figures 4 is an enlarged perspective view of some details of the plug connector of Figure 3, with parts removed for clarity;
Figure 5 is an enlarged perspective view of a further part of the details of Figure 4, with parts removed for clarity; and
Figures 6A to Figures 6C schematically illustrate the control of a device of the plug connector of Figures 1 and 2, with parts removed for clarity.

### BEST MODES FOR CARRYING OUT THE INVENTION

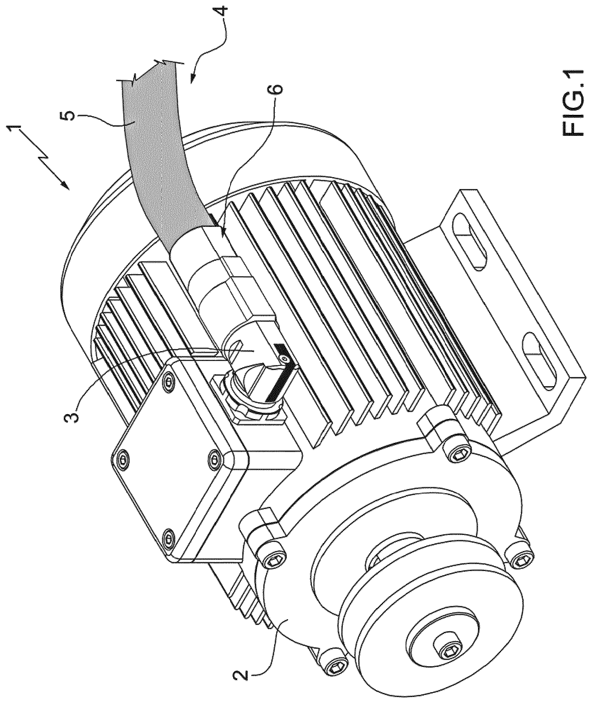

Number 1 in Figure 1 illustrates as a whole a portion of a processing machine comprising a first machine component, in particular an electrical motor 2, an electrical socket connector 3 connected to the first machine component and an electrical cable assembly 4 connected to electrical socket connector 3. Preferentially, cable assembly 4 is connected to a second machine component (not shown), in particular a power source, of the processing machine.

In more detail, cable assembly 4 comprises an electrical cable 5 and an electrical plug connector 6 coupled to cable 5. In particular, plug connector 6 is (directly) connected to socket connector 3 and cable 5 is (directly) connected to the second machine component.

In the example shown, cable assembly 4 is configured to supply electrical energy to machine component 2. In an alternative embodiment, cable assembly 4 could be configured to provide electrical energy and/or control signals to machine component 2.

Preferably, socket connector 3 comprises at least one of a male or female connector element, preferentially at least a group of male or female connector elements. In a preferred embodiment, socket connector 3 comprises a group of male connector elements.

Preferentially, plug connector 6 comprises the other one of a male or female connector element complementary to the male or female connector element of socket connector 3 or the other one of a group of male or female connector elements complementary to the group of male or female connector elements of socket connector 3. Preferentially, plug connector 6 comprises a group of female connector elements complementary to the group of male connector elements of socket connector 2.

Preferably, cable 4 is connected to the male or female connector element or the group of female or male connector elements of plug connector 6.

It should be noted that in the following description with plug connector 3 is meant any electrical connector independently of whether it is a male or female connector.

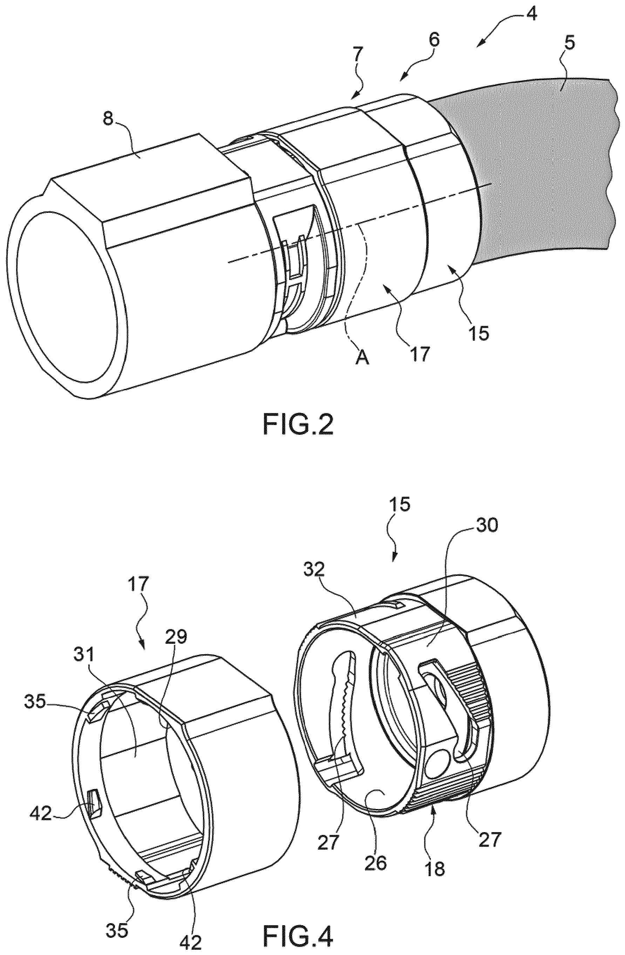

With particular reference to Figure 2 to 4, plug connector 6 comprises:
- a clamp portion 7 extending along a longitudinal axis A and being arranged at a first end of plug connector 6 itself for receiving and clamping cable 5;
- a connection portion 8 (known as such and not further explained) arranged at a second end of plug connector 6 opposite to the first end and configured to connect plug connector 6 to socket connector 3.

In more detail, clamp portion 7 comprises:
- a clamp housing 12 delimiting an inner space for receiving cable 5;
- a clamp ring 14 being controllable between a receiving configuration at which clamp ring 14 is configured to receive cable 5 and a clamping configuration at which clamp ring 14 is configured to exert a clamping force on cable 5;
- an actuation ring 15 coupled or configured to be coupled to clamp housing 12 and configured to control clamp ring 14 between the receiving configuration and the clamping configuration; and
- a bayonet locking device 16 associated to clamp housing 12 and actuation ring 15 and configured to at least secure actuation ring 15 on clamp housing 12.

Plug connector 6, in particular clamping portion 7, further comprises:
- a cover ring 17 being arranged such to surround (superimpose) at least a section 18 of actuation ring 15 carrying at least a portion of bayonet locking device 16; and
- a locking device for locking cover ring 17 in a locked configuration at which cover ring 17 is secured on clamp housing 12 and the locking device being configured to be activated at least upon rotation of cover ring 17 around axis A.

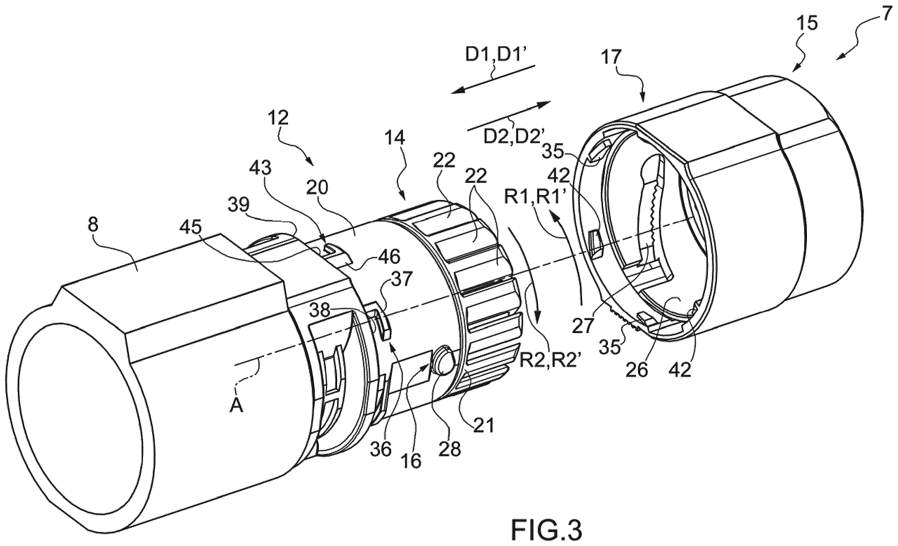

With particular reference to Figure 3, clamp housing 12 has an outer engagement surface 20; and an inner surface (not shown) delimiting the inner space. In particular, clamp housing 12 has a substantially cylindrical shape. In other words, clamp housing 12 has an annular shaped cross-sectional profile.

Preferentially, clamp housing 12 is made of a metallic material.

With particular reference to Figure 3, clamp ring 14 is arranged at, in particular connected to, an end portion of clamp housing 12 from which, in use, cable 5 extends into the inner space.

In particular, clamp ring 14 is coaxially arranged with respect to clamp housing 12.

Preferably, clamp ring 14 comprises a support ring 21 and a plurality of fins 22 connected to and axially protruding away from support ring 21. In particular, fins 22 are equally spaced around support ring 21.

In particular, with clamp ring 14 being in the receiving configuration fins 22 extend substantially parallel to axis A.

Preferably, fins 22 are configured to define a first effective diameter and a second effective diameter with clamp ring 14 being respectively in the receiving configuration and the clamping configuration. The second effective diameter being smaller than the first effective diameter. In particular, upon the exertion of a force, in particular by means of actuation ring 15, on clamp ring 14, in particular on fins 22, fins 22 become elastically moved towards axis A, so as to obtain the second effective diameter.

Preferably, clamp ring 14 is made of a polymeric material.

With particular reference to Figure 3 and 4, actuation ring 15 is removably coupled to clamp housing 12, in particular so as to allow for assembling and disassembling of plug connector 6.

In particular, actuation ring 15 at least partially surrounds clamp housing 12 with actuation ring 15 being coupled to (connected to) clamp housing 12.

Preferably, actuation ring 15 has a substantially annular cross-sectional profile.

In more detail, actuation ring 15 has an inner engagement surface 26 configured to engage with engagement surface 20. In the case of plug connector 6 being assembled, engagement surface 26 and engagement surface 20 engage one another.

Preferably, actuation ring 15 is rotatable around axis A, in particular into a first sense of rotation R1 and a second sense of rotation R2 opposite to sense of rotation R1. Preferentially, actuation ring 15 is also configured to linearly move into a first direction D1 and a second direction D2 opposite to the direction D1. In particular, direction D1 and direction D2 are parallel to axis A. Even more particular, actuation ring 15 is configured to approach connection portion 8 moving, in use, into direction D1 and is configured to withdraw from connection portion 8 moving, in use, into direction D2.

Preferentially, actuation ring 15 is configured to exert a force on clamp ring 14 so as to control clamp ring 14 between the receiving configuration and the clamping configuration in dependence of the angular position of actuation ring 15.

In more detail, actuation ring 15 is configured to be controlled between a rest position and an operative position at which actuation ring 15 is configured to control clamp ring 14 into respectively the receiving configuration and the clamping configuration. In particular, actuation ring 15 is controlled between the rest position and the operative position upon rotation of actuation ring 15 around axis A and, in particular also upon the linear movement of actuation ring 15 parallel to axis A. Even more particular, actuation ring 15 is controlled from the rest position to the operative position and from the operative position to the rest position upon rotation of actuation ring 15 around axis A into respectively sense of rotation R1 and sense of rotation R2 and, preferentially also upon movement of actuation ring 15 respectively into direction D1 and direction D2.

Preferably, actuation ring 15 is locked on clamp housing 12 when being arranged at the operative position.

In particular, bayonet locking device 16 is configured to determine the rest position and the operative position of actuation ring 15. Even more particular, bayonet locking device 16 is configured to guide rotation of actuation ring 15 around axis A and, in particular also the linear movement of actuation ring 15 along direction D1 and direction D2.

In more detail, bayonet device 16 comprises at least one bayonet notch 27, preferentially at least two bayonet notches 27, provided on actuation ring 15 and at least one guiding pin 28, preferentially at least two guiding pins 28, provided on clamp housing 12, in particular protruding away from engagement surface 20. Each pin 28 is configured to cooperate with one respective notch 27, in particular each pin 28 is configured to engage into the respective notch 27.

In particular, notch 27 or notches 27 is/are configured to determine the rotation of actuation ring 15 around axis A, in particular also the linear movement of actuation ring 15 parallel to axis A.

Preferably, section 18 is defined by the section of actuation ring 15 being provided with notch 27 or notches 27.

It should be noted that in the preferred embodiment disclosed, bayonet device 16 comprises two notches 27 and two pins 28 as this allows to obtain and to secure a symmetrical force distribution acting on clamp ring 14.

With particular reference to Figures 2 to 5, cover ring 17 is arranged such that at least section 18 is interposed between clamp housing 12 and cover ring 17. In other words, cover ring 17 is arranged so as to cover notches 27, in particular allowing to avoid contaminations to migrate into plug connector 6 through notches 27.

Preferentially, cover ring 17 is rotatable around axis A, in particular into a first sense of rotation R1' and a second sense of rotation R2'. Preferentially, cover ring 17 is also configured to linearly move parallel to axis A, in particular into a first direction D1' and a second direction D2' parallel to axis A. Even more particular, cover ring 17 is configured to approach connection portion 8 in moving, in use, into direction D1' and is configured to withdraw from connection portion 8 in moving, in use, into direction D2'.

In more detail, cover ring 17 is configured to be controlled between an initial position and an end position at which cover ring 17 is controlled into its locked configuration. In particular, cover ring 17 is controlled between the initial position and the end position at least upon rotation of cover ring 17 around axis A and, in particular also upon the linear movement of cover ring 17 parallel to axis A. Even more particular, cover ring 17 is controlled from the initial position to the end position and from the end position to the intial position upon rotation of cover ring 17 around axis A into respectively sense of rotation R1' and sense of rotation R2' and, preferentially also upon movement of cover ring 17 respectively into direction D1' and direction D2'.

Preferentially, sense of rotation R1' is parallel to sense of rotation R1 and sense of rotation R2' is parallel to sense of rotation R2. Even more preferentially, also direction D1' is parallel to direction D1 and direction D2' is parallel to D2.

In a preferred embodiment, cover ring 17 is coupled to, in particular (mechanically) connected to, actuation ring 15. Preferentially, cover ring 17 comprises a first interaction portion 29 and actuation ring 15 comprises a second interaction portion 30 interacting with interaction portion 29 for connecting cover ring 17 and actuation ring 15 to one another. In particular, interaction portion 29 is provided at an inner surface 31 of cover ring 17 and interaction portion 30 is provided at an outer surface 32 of actuation ring 15.

Preferentially, cover ring 17 and actuation ring 15 are coupled, in particular through interaction of interaction portion 29 and interaction portion 30 with one another, in such a manner to impede a relative movement between cover ring 17 and actuation ring 15. In other words, cover ring 17 is coupled to actuation ring 15 in such a manner that rotation of actuation ring 15 into direction R1 and direction R2 and, in particular of the linear movement into direction D1 and direction D2, results, in use, in rotation of cover ring 17 into respectively direction R1' and direction R2', in particular also in the linear movement into direction D1' and D2', and vice versa.

Preferably, cover ring 17 is arranged at the end position (controlled into the locked configuration) with actuation ring 15 being controlled into the operative position.

Preferentially, cover ring 17 and actuation ring 15 are also coupled in such a manner that cover ring 17 being at the end position exerts a force on actuation ring 15 contributing to the force exerted by actuation ring 15 onto clamp ring 14.

Preferentially, bayonet device 16 is configured to determine the initial position and the end position of cover ring 17. More specifically, rotation of cover ring 17 into sense of rotation R1' and into sense of rotation R2', in particular also of the linear movement into direction D1' and into direction D2', is determined by bayonet device 16.

In more detail, as notch 27 or notches 27 are provided with actuation ring 15 and as preferably actuation ring 15 and cover ring 17 are coupled to one another, the interaction of pin 28 or pins 28 with notch 27 or notches 27 determines the rotation of cover ring 17 around axis A and, in particular also of the linear movement of cover ring 17.

Preferentially, cover ring 17 is of a polymeric material.

With particular reference to Figures 3 to 6, the locking device is configured to be activated for controlling cover ring 17 into the locked configuration upon rotation of cover ring 17 around axis A into sense of rotation R1' and, preferentially also upon movement into direction D1'. Preferentially, with cover ring 17 being in the locked configuration rotation of cover ring 17 around axis A into sense of rotation R1' is impeded, even more preferentially also movement into direction D1' is impeded.

In the example embodiment disclosed, the locking device is also configured to block (to irreversibly lock) cover ring 17 in the locked configuration. This means that once cover ring 17 is controlled into the locked configuration, any (non-destructive) controlled removal of cover ring 17 is prevented. In other words, rotation of cover ring 17 into sense of rotation R1' and into sense of rotation R2', and preferentially of movement into direction D1' and direction D2' is prevented. This allows to guarantee that once plug connector 6 and cable 5 are assembled to form cable assembly 4 it is not possible to disassemble plug connector 6 and cable 5 without destroying cable assembly 4, in particular improving the safety standards of such a cable assembly 4. This also means that in a preferred embodiment, once cover ring 17 is irreversibly locked in the locked configuration, also actuation ring 15 is locked (even though, upon destruction of cover ring 17 is removable again).

In more detail, the locking device comprises at least a main locking group 33 adapted to control cover ring 17 into the locked configuration.

Preferentially, the locking device also comprises an auxiliary locking group 34 configured to irreversible lock in cooperation with locking group 33 cover ring 17 in the locking configuration. In the context of the present disclosure irreversibly locking means that cover ring 17 is impeded to rotate around axis neither in sense of rotation R1' nor in sense of rotation R2'; in other words, removal of cover ring 17 is possible only upon the destructive removal of cover ring 17. In even other words, it is possible to move cover ring 17 from the initial position into the end position, but not backwards.

In an alternative embodiment not shown, the locking device only comprises locking group 33 (and not locking group 34). In such an alternative embodiment it is possible to reversibly (i.e. without destruction) control cover ring 17 into the locked configuration. In other words, in such an alternative embodiment, it is possible to move cover ring 17 from the initial position to the end position and vice versa.

In further detail, the locking device, in particular locking group 33, comprises at least one pair, preferentially more than one pair, of a first locking element 35 and a second locking element 36.

In particular, locking element 35 is associated to cover ring 17 and locking element 36 is associated to clamp housing 12.

Even more particular, locking element 35 is connected to surface 31. Preferentially, locking element 35 protrudes away from surface 31. Preferentially, locking element 35 is integral to cover ring 17, even more preferentially to surface 31.

Preferably, locking element 35 is of a polymeric material.

Even more particular, locking element 36 is at least partially carried by outer engagement surface 20.

Preferably, locking element 36 comprises an L-shaped portion 37 and a wall portion 38, in particular wall portion 38 being a section of an abutment surface 39 arranged in the proximity of connection portion 8.

In a preferred embodiment, locking group 33 comprises more than one pair of locking element 35 and locking element 36. The plurality of locking elements 35 are equally spaced along inner surface 31 and the plurality of locking elements 36 are equally spaced along outer engagement surface 20.

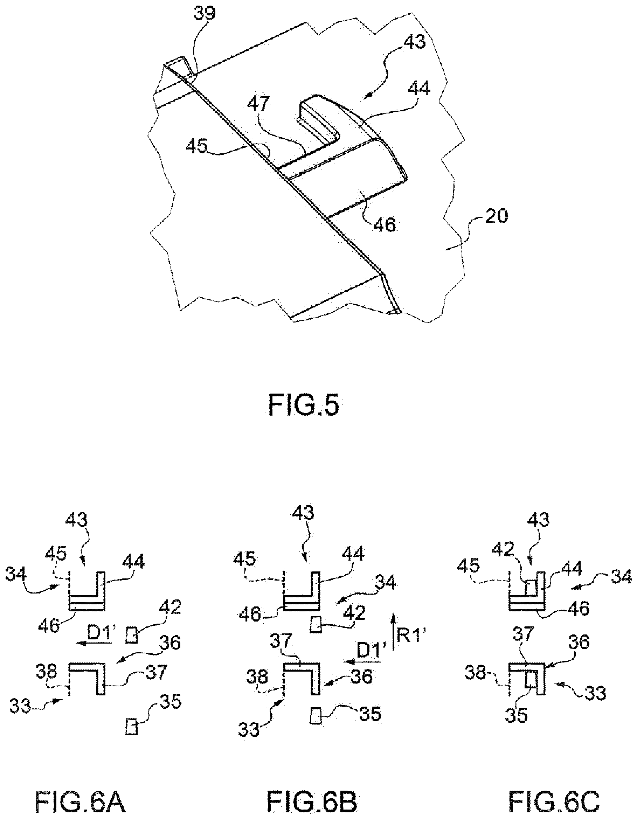

With particular reference to Figures 6A to 6C, each locking element 35 and the respective locking element 36 are configured to couple to one another. In particular, with cover ring 17 being controlled into the locked configuration each locking element 35 and the respective locking element 36 are coupled to one another.

More specifically, each locking element 35 is arranged such that it becomes coupled to the respective locking element 36 upon movement of cover ring 17 from the initial position to the end position. In other words, each locking element 35 becomes coupled to the respective locking element 36 upon rotation of cover ring 17 around axis A into sense of rotation R1' and, preferentially, upon movement into direction D1'.

In even further detail, interaction of each locking element 35 with the respective locking element 36 impedes at least rotation of cover ring 17 into sense of rotation R1', preferentially also of linear movement of cover ring 17 into direction D1' and direction D2'.

In particular, interaction of each locking element 35 with the respective L-shaped portion 37 impedes at least rotation into sense of rotation R1' and, preferentially also of linear movement into direction D2'; and interaction with the respective wall portion 38 impedes linear movement into direction D1'.

With particular reference to Figures 3 to 6C, locking group 34 comprises at least one pair, preferentially more than one pair, of a first auxiliary locking element 42 and a second auxiliary locking element 43.

In particular, locking element 42 is associated to cover ring 17 and locking element 43 is associated to clamp housing 12.

Even more particular, locking element 42 is connected to surface 31. Preferentially, locking element 42 protrudes away from surface 31. Preferentially, locking element 42 is integral to cover ring 17, even more preferentially to surface 31.

Preferably, locking element 42 is of a polymeric material.

Even more particular, locking element 43 is at least partially carried by outer engagement surface 20.

Preferably, locking element 43 comprises an L-shaped portion 44 and a wall portion 45, in particular wall portion 45 being defined by a section of abutment surface 39.

In a preferred embodiment, locking group 34 comprises more than one pair of locking element 42 and locking element 43. Locking elements 42 are equally spaced along inner surface 31 and locking elements 43 are equally spaced along outer engagement surface 20. In particular, each locking element 42 is interposed between two locking elements 35 and each locking element 43 is interposed between two locking elements 36.

With particular reference to Figures 6A to 6C, each locking element 35 and the respective locking element 36 are configured to couple to one another. In particular, with cover ring 17 being controlled into the locked configuration each locking element 35 and the respective locking element 36 are coupled to one another.

More specifically, each locking element 42 is arranged such that it becomes coupled to the respective locking element 43 upon movement of cover ring 17 from the initial position to the end position. In other words, each locking element 42 becomes coupled to the respective locking element 43 upon rotation of cover ring 17 around axis A into sense of rotation R1' and, preferentially, upon movement into direction D1'.

In even further detail, interaction of each locking element 42 with the respective locking element 43 impedes at least rotation of cover ring 17 into sense of rotation R2', preferentially also of linear movement of cover ring 17 into direction D1' and direction D2'. In particular, interaction of each locking element 42 with the respective L-shaped portion 44 impedes at least rotation into sense of rotation R2' and, preferentially also of linear movement into direction D2'; and interaction with the respective wall portion 45 impedes linear movement into direction D1'.

In particular, as interaction of each locking element 35 with the respective locking element 36 impedes rotation of cover ring 17 into the sense of rotation R1' and as interaction of each locking element 42 with the respective locking element 43 impedes rotation of cover ring 17 into sense of rotation R2' rotation of cover ring 17 is prevented and cover ring 17 becomes irreversibly locked.

During movement of cover ring 17 from the initial position to the end position each locking element 42 advances along an advancement path. At a certain stage of the advancement along the advancement path, prior of cover ring 17 being positioned at the end position, each locking element 42 gets into contact with the respective locking element 43, in particular a back portion of the respective locking element 43. In order for each locking element 43 to proceed along the advancement path, each locking element 43 comprises a ramp portion 46 (see Figure 5).

In particular, each ramp portion 46 is arranged upstream of an abutment portion 47 of locking element 43 along the advancement path, the respective locking element 42 being in abutment with abutment portion 47 when cover ring 17 is controlled into the locked configuration (arranged at the end position).

For assembling cable assembly 4 at first actuation ring 15 together with cover ring 17 are separately kept from the portion of plug connector 6 formed by connection portion 8, clamp housing 12 and clamp ring 14. Then cable 5 is guided, in particular coaxially guided, through actuation ring 15 and clamp ring 14 into clamp housing 12.

Then cable 5 becomes clamped (secured) within plug connector 6, in particular clamp housing 12.

In particular, actuation ring 15 together with cover ring 17 is approached to clamp housing 12 and upon activation of bayonet locking device 16 actuation ring 15 is controlled into the operative position so as to control clamp ring 14 into the clamping configuration. At the same time, cover ring 17 is controlled into the locking configuration.

In particular, for controlling actuation ring 15 into the operative position and cover ring 17 into the locked configuration actuation ring 15 and cover ring 17 are simultaneously rotated around axis A into respectively sense or rotation R1 and sense of rotation R1'. Preferentially, actuation ring 15 and cover ring 17 are also linearly moved into respectively direction D1 and direction D1'.

The locking device, in particular locking group 33, at least locks cover ring 17 into the locking configuration.

Preferentially, the locking device irreversibly locks cover ring 17 into the locking configuration. In particular, cover ring 17 is blocked in the locking configuration through cooperation of locking group 33 and locking group 34.

In further detail, upon rotation of cover ring 17 around axis A and linear movement into direction D1' each locking element 35 becomes coupled to the respective locking element 36. Preferentially, also each locking element 42 becomes coupled to the respective locking element 43.

This is schematically shown in Figures 6A to 6C, which illustrate a projection into 2-dimensions of one pair of locking element 35 and locking element 36 and one pair of locking element 42 and locking element 43. At first with cover ring 17 being arranged at the initial position each locking element 35 and each locking element 42 is distanced from the respective locking element 36 and locking element 43 (see Figure 6A). Upon linear movement of cover ring 17 into direction D1' each locking element 35 and each locking element 42 approach towards the respective locking element 36 and the respective locking element 43 (see Figures 6A and 6B). Then, upon rotation and linear movement of cover ring 17 into respectively sense of rotation R1' and direction D1' each locking element 35 and each locking element 42 is coupled to respectively the respective locking element 36 and the respective locking element 43 (see Figure 6C). In particular, prior to each locking element 42 abutting with the respective abutment portion 47, each locking element 42 slides over the respective ramp portion 46.

The advantages of plug connector 6 according to the present invention will be clear from the foregoing description.

In particular, cover ring 17 covers section 18 and therewith bayonet notches 27. This allows to significantly reduce the risk of contaminations migrating into plug connector 6.

A further advantage resides in that cover ring 17 allows to exert a force onto actuation ring 15 improving thereby the force distribution acting on clamp ring 14.

An even further advantage resides in locking group 34, which allows to irreversibly lock cover ring 17 in the locked configuration. This ensures that once cable assembly 4 is assembled no further manipulation can be executed without destroying cover ring 17 increasing thereby the safety of such a cable assembly 4 as any unauthorized manipulation is directly observable.

Clearly, changes may be made to plug connector 6 as described herein without, however, departing from the scope of protection as defined in the accompanying claims.

## Claims

1. Electrical plug connector (6) comprising:
- a clamp portion (7) extending along a longitudinal axis (A) and being arranged at a first end of the electrical plug connector (6) for receiving and clamping an electrical cable (5);
wherein the clamp portion (7) comprises:
- a clamp housing (12) delimiting an inner space for receiving the electrical cable (5);
- a clamp ring (14) being controllable between a receiving configuration at which the clamp portion (7) is adapted to receive the electrical cable (5) and a clamping configuration at which the clamp ring (14) is configured to exert a clamping force on the electrical cable (5);
- an actuation ring (15) coupled to the clamp housing (12) and configured to control the clamp ring (14) between the receiving configuration and the clamping configuration; and
- a bayonet locking device (16) associated to the clamp housing (12) and the actuation ring (15) and configured to secure the actuation ring (15) on the clamp housing (12);
the electrical plug connector (6) being **characterized in** further comprising:
- an cover ring (17) being rotatable around the longitudinal axis (A) and being arranged such to surround at least a section (18) of the actuation ring (15) carrying at least a portion of the bayonet device (16); and
- a locking device for locking the cover ring (17) in a locked configuration at which the cover ring (17) is secured onto the clamp housing (12);
wherein the locking device is configured to be activated at least upon rotation of the cover ring (17) around the longitudinal axis (A).

2. The electrical plug connector according to claim 1, wherein the bayonet locking device (16) comprises at least one bayonet notch (27) provided at the section (18) of actuation ring (15).

3. The electrical plug connector according to claim 1 or 2, wherein the locking device is configured to be actuated to lock the cover ring (17) in the locked configuration upon rotation of the cover ring (17) around the longitudinal axis (A) into a first sense of rotation (Rl') and upon a linear movement of the cover ring (17) parallel to the longitudinal axis (A);
wherein, with the cover ring (17) being in the locked configuration, a further rotation of the cover ring (17) around the longitudinal axis (A) into the first sense of rotation is impeded (R1') and a further linear movement of the cover ring (17) parallel to the longitudinal axis (A).

4. The electrical plug connector according to any one of the preceding claims, wherein the locking device comprises at least one pair of a first locking element (35) and a second locking element (36);
wherein the first locking element (35) is associated to the cover ring (17) and the second locking element (36) is associated to the clamp housing (12);
wherein the first locking element (35) is configured to be coupled to the second locking element (36) upon rotation of the cover ring (17) around the longitudinal axis (A);
wherein the cover ring (17) is controlled into the locked configuration with the first locking element (35) and the second locking element (36) being coupled to one another.

5. The electrical plug according to claim 3, wherein the cover ring (17) comprises an inner surface (31) carrying the first locking element (35) and the clamp housing (12) comprises an outer engagement surface (20) at least partially carrying the second locking element (36).

6. The electrical plug connector according to any one of the preceding claims, wherein the locking device comprises a main locking group (33) and an auxiliary locking group (34) for irreversibly locking in cooperation the cover ring (17) in the locking configuration.

7. The electrical plug connector according to claim 6, wherein the main locking group (33) and the auxiliary locking group (34) are configured to impede at least rotation of the cover ring (17) around the longitudinal axis (A) into respectively a first sense of rotation (R1') and a second sense of rotation (R2') opposite to the first sense of rotation (R1').

8. The electrical plug connector according to claim 6 or 7, wherein the auxiliary locking group (34) comprises at least one pair of a first auxiliary locking element (42) and a second auxiliary locking element (43);
wherein the first auxiliary locking element (42) is associated to the cover ring (17) and the second auxiliary locking element (43) is associated to the clamp housing (12);
wherein the first auxiliary locking element (42) and the second auxiliary locking element (43) are coupled to one another with the cover ring (17) being in the locked configuration.

9. The electrical plug connector according to claim 8, wherein the cover ring (17) comprises an inner surface (31) carrying the first auxiliary locking element (42) and the clamp housing (12) comprises an outer engagement surface (20) carrying the second auxiliary locking element (43).

10. An electrical plug connector according to claim 8 or 9, wherein the second auxiliary locking element (42) comprises an abutment portion (47) with which the respective first auxiliary locking element (42) is in abutment with the cover ring (17) being in the locked configuration and a ramp portion (46) being arranged upstream of the abutment portion (47) along an advancement path of the respective first auxiliary locking element (42) and being configured to guide the first auxiliary locking element (42) so as to abut with the abutment portion (47).

11. An electrical cable assembly (4) comprising an electrical cable (5) and an electrical plug connector (6) according to any one of the preceding claims.

## Patentansprüche

1. Elektrischer Steckverbinder (6), umfassend:
- einen Klemmabschnitt (7), der sich entlang einer Längsachse (A) erstreckt und an einem ersten Ende des elektrischen Steckverbinders (6) zum Aufnehmen und Festklemmen eines elektrischen Kabels (5) angeordnet ist;
wobei der Klemmabschnitt (7) umfasst:
- ein Klemmgehäuse (12), das einen Innenraum zum Aufnehmen des elektrischen Kabels (5) begrenzt;
- einen Klemmring (14), der zwischen einer Aufnahmekonfiguration, bei der der Klemmabschnitt (7) zum Aufnehmen des elektrischen Kabels (5) angepasst ist, und einer Klemmkonfiguration Steuer- bzw. regelbar ist, bei der der Klemmring (14) konfiguriert ist, eine Klemmkraft auf das elektrische Kabel (5) auszuüben;
- einen Betätigungsring (15), der mit dem Klemmgehäuse (12) gekoppelt ist und konfiguriert ist, den Klemmring (14) zwischen der Aufnahmekonfiguration und der Klemmkonfiguration zu steuern bzw. zu regeln; und
- eine Bajonettverriegelungsvorrichtung (16), die dem Klemmgehäuse (12) und dem Betätigungsring (15) zugeordnet ist und konfiguriert ist, den Betätigungsring (15) an dem Klemmgehäuse (12) zu sichern bzw. zu befestigen;
wobei der elektrische Steckverbinder (6) **dadurch gekennzeichnet, dass** er ferner umfasst:
- einen Abdeckring (17), der um die Längsachse (A) drehbar ist und so angeordnet ist, dass er zumindest einen Abschnitt (18) des Betätigungsrings (15) umgibt, der zumindest einen Abschnitt der Bajonettvorrichtung (16) trägt; und
- eine Verriegelungsvorrichtung zum Verriegeln des Abdeckrings (17) in einer verriegelten Konfiguration, bei der der Abdeckring (17) auf dem Klemmgehäuse (12) gesichert bzw. befestigt ist;
wobei die Verriegelungsvorrichtung dahingehend konfiguriert ist, zumindest bei Drehung des Abdeckrings (17) um die Längsachse (A) aktiviert zu werden.

2. Elektrischer Steckverbinder nach Anspruch 1, wobei die Bajonettverriegelungsvorrichtung (16) zumindest eine Bajonettkerbe (27) umfasst, die an dem Abschnitt (18) des Betätigungsrings (15) bereitgestellt ist.

3. Elektrischer Steckverbinder nach Anspruch 1 oder 2, wobei die Verriegelungsvorrichtung konfiguriert ist, betätigt zu werden, um den Abdeckring (17) in der verriegelten Konfiguration bei Drehung des Abdeckrings (17) um die Längsachse (A) in einer erste Drehrichtung (R1') und bei einer linearen Bewegung des Deckrings (17) parallel zu der Längsachse (A) zu verriegeln; wobei, wenn sich der Abdeckring (17) in der verriegelten Konfiguration befindet, eine weitere Drehung des Abdeckrings (17) um die Längsachse (A) in der ersten Drehrichtung (R1') und eine weitere lineare Bewegung des Abdeckrings (17) parallel zu der Längsachse (A) be- bzw. verhindert wird.

4. Elektrischer Steckverbinder nach einem der vorhergehenden Ansprüche, wobei die Verriegelungsvorrichtung zumindest ein Paar eines ersten Verriegelungselements (35) und eines zweiten Verriegelungselements (36) umfasst; wobei das erste Verriegelungselement (35) dem Abdeckring (17) zugeordnet ist und das zweite Verriegelungselement (36) dem Klemmgehäuse (12) zugeordnet ist;
wobei das erste Verriegelungselement (35) konfiguriert ist, bei Drehung des Abdeckrings (17) um die Längsachse (A) mit dem zweiten Verriegelungselement (36) gekoppelt zu werden;
wobei der Abdeckring (17) in die verriegelte Konfiguration gesteuert bzw. geregelt wird, bei der das erste Verriegelungselement (35) und das zweite Verriegelungselement (36) miteinander gekoppelt sind.

5. Elektrischer Stecker nach Anspruch 3, wobei der Abdeckring (17) eine innere Fläche bzw. Oberfläche (31) umfasst, die das erste Verriegelungselement (35) trägt, und das Klemmgehäuse (12) zumindest eine äußere Eingriffsfläche bzw. -oberfläche (20) umfasst, die das zweite Verriegelungselement (36) zumindest teilweise trägt.

6. Elektrischer Steckverbinder nach einem der vorhergehenden Ansprüche, wobei die Verriegelungsvorrichtung eine Hauptverriegelungsgruppe (33) und eine Hilfsverriegelungsgruppe (34) zum irreversiblen Verriegeln in Mitwirkung des Abdeckrings (17) in der Verriegelung umfasst.

7. Elektrischer Steckverbinder nach Anspruch 6, wobei die Hauptverriegelungsgruppe (33) und die Hilfsverriegelungsgruppe (34) konfiguriert sind, zumindest eine Drehung des Abdeckrings (17) um die Längsachse (A) in jeweils eine erste Drehrichtung (R1') und eine zweite Drehrichtung (R2') entgegengesetzt zu der ersten Drehrichtung (R1') zu be- bzw. verhindern.

8. Elektrischer Steckverbinder nach Anspruch 6 oder 7, wobei die Hilfsverriegelungsgruppe (34) zumindest ein Paar eines ersten Hilfsverriegelungselements (42) und eines zweiten Hilfsverriegelungselements (43) umfasst;
wobei das erste Hilfsverriegelungselement (42) dem Abdeckring (17) zugeordnet ist und das zweite Hilfsverriegelungselement (43) dem Klemmgehäuse (12) zugeordnet ist;
wobei das erste Hilfsverriegelungselement (42) und das zweite Hilfsverriegelungselement (43) miteinander gekoppelt sind, wobei sich der Abdeckring (17) in der verriegelten Konfiguration befindet.

9. Elektrischer Steckverbinder nach Anspruch 8, wobei der Abdeckring (17) eine innere Fläche bzw. Oberfläche (31) umfasst, die das erste Hilfsverriegelungselement (42) trägt, und das Klemmgehäuse (12) eine äußere Eingriffsfläche bzw. -oberfläche (20) umfasst, die das zweite Hilfsverriegelungselement (43) trägt.

10. Elektrischer Steckverbinder nach Anspruch 8 oder 9, wobei das zweite Hilfsverriegelungselement (42) einen Anlage- bzw. Widerlagerabschnitt (47), mit dem das jeweilige erste Hilfsverriegelungselement (42) in Anlage ist, wobei sich der Abdeckring (17) in der verriegelten Konfiguration befindet, und einen Rampenabschnitt (46) umfasst, der stromaufwärts des Widerlagerabschnitts (47) entlang eines Vorschubwegs des jeweiligen ersten Hilfsverriegelungselements (42) angeordnet ist und konfiguriert ist, das erste Hilfsverriegelungselement (42) dahingehend zu führen, mit dem Widerlagerabschnitt (47) in Anlage zu kommen.

11. Elektrische Kabelanordnung (4), umfassend ein elektrisches Kabel (5) und einen elektrischen Steckverbinder (6) nach einem der vorhergehenden Ansprüche.

## Revendications

1. Connecteur électrique (6) comprenant :
- une partie de serrage (7) s'étendant le long d'un axe longitudinal (A) et étant agencée au niveau d'une première extrémité du connecteur électrique (6) pour recevoir et serrer un câble électrique (5) ;
dans lequel la partie de serrage (7) comprend :
- un boîtier de serrage (12) délimitant un espace interne pour recevoir le câble électrique (5) ;
- une bague de serrage (14) qui est contrôlable entre une configuration de réception dans laquelle la partie de serrage (7) est adaptée pour recevoir le câble électrique (5) et une configuration de serrage dans laquelle la bague de serrage (14) est configurée pour exercer une force de serrage sur le câble électrique (5) ;
- une bague d'actionnement (15) couplée au boîtier de serrage (12) et configurée pour contrôler la bague de serrage (14) entre la configuration de réception et la configuration de serrage ; et
- un dispositif de verrouillage à baïonnette (16) associé au boîtier de serrage (12) et à la bague d'actionnement (15) et configuré pour fixer la bague d'actionnement (15) sur le boîtier de serrage (12) ;
le connecteur électrique (6) étant **caractérisé en ce qu'**il comprend en outre :
- une bague de recouvrement (17) qui peut tourner autour de l'axe longitudinal (A) et qui est agencée afin d'entourer au moins une section (18) de la bague d'actionnement (15) portant au moins une partie du dispositif à baïonnette (16) ; et
- un dispositif de verrouillage pour verrouiller la bague de recouvrement (17) dans une configuration verrouillée dans laquelle la bague de recouvrement (17) est fixée sur le boîtier de serrage (12) ;
dans lequel le dispositif de verrouillage est configuré pour être activé au moins suite à la rotation de la bague de recouvrement (17) autour de l'axe longitudinal (A).

2. Connecteur électrique selon la revendication 1, dans lequel le dispositif de verrouillage à baïonnette (16) comprend au moins une encoche de baïonnette (27) prévue au niveau de la section (18) de la bague d'actionnement (15).

3. Connecteur électrique selon la revendication 1 ou 2, dans lequel le dispositif de verrouillage est configuré pour être actionné afin de verrouiller la bague de recouvrement (17) dans la configuration verrouillée suite à la rotation de la bague de recouvrement (17) autour de l'axe longitudinal (A) dans un premier sens de rotation (R1') et suite à un mouvement linéaire de la bague de recouvrement (17) parallèle à l'axe longitudinal (A) ;
dans lequel, avec la bague de recouvrement (17) qui est dans la configuration verrouillée, une rotation supplémentaire de la bague de recouvrement (17) autour de l'axe longitudinal (A) dans le premier sens de rotation est empêchée (R1') et un mouvement linéaire supplémentaire de la bague de recouvrement (17) parallèle à l'axe longitudinal (A).

4. Connecteur électrique selon l'une quelconque des revendications précédentes, dans lequel le dispositif de verrouillage comprend au moins une paire composée d'un premier élément de verrouillage (35) et d'un second élément de verrouillage (36) ;
dans lequel le premier élément de verrouillage (35) est associé à la bague de recouvrement (17) et le second élément de verrouillage (36) est associé au boîtier de serrage (12) ;
dans lequel le premier élément de verrouillage (35) est configuré pour être couplé au second élément de verrouillage (36) suite à la rotation de la bague de recouvrement (17) autour de l'axe longitudinal (A) ;
dans lequel la bague de recouvrement (17) est contrôlée dans la configuration verrouillée avec le premier élément de verrouillage (35) et le second élément de verrouillage (36) qui sont couplés entre eux.

5. Connecteur électrique selon la revendication 3, dans lequel la bague de recouvrement (17) comprend une surface interne (31) portant le premier élément de verrouillage (35) et le boîtier de serrage (12) comprend une surface de mise en prise externe (20) portant au moins partiellement le second élément de verrouillage (36) .

6. Connecteur électrique selon l'une quelconque des revendications précédentes, dans lequel le dispositif de verrouillage comprend un groupe de verrouillage principal (33) et un groupe de verrouillage auxiliaire (34) pour verrouiller de manière irréversible, en coopération, la bague de recouvrement (17) dans la configuration de verrouillage.

7. Connecteur électrique selon la revendication 6, dans lequel le groupe de verrouillage principal (33) et le groupe de verrouillage auxiliaire (34) sont configurés pour empêcher au moins la rotation de la bague de recouvrement (17) autour de l'axe longitudinal (A) respectivement dans un premier sens de rotation (R1') et dans un second sens de rotation (R2') opposé au premier sens de rotation (R1').

8. Connecteur électrique selon la revendication 6 ou 7, dans lequel le groupe de verrouillage auxiliaire (34) comprend au moins une paire composée d'un premier élément de verrouillage auxiliaire (42) et d'un second élément de verrouillage auxiliaire (43) ;
dans lequel le premier élément de verrouillage auxiliaire (42) est associé à la bague de recouvrement (17) et le second élément de verrouillage auxiliaire (43) est associé au boîtier de serrage (12) ;
dans lequel le premier élément de verrouillage auxiliaire (42) et le second élément de verrouillage auxiliaire (43) sont couplés entre eux avec la bague de recouvrement (17) qui est dans la configuration verrouillée.

9. Connecteur électrique selon la revendication 8, dans lequel la bague de recouvrement (17) comprend une surface interne (31) portant le premier élément de verrouillage auxiliaire (42) et le boîtier de serrage (12) comprend une surface de mise en prise externe (20) portant le second élément de verrouillage auxiliaire (43) .

10. Connecteur électrique selon la revendication 8 ou 9, dans lequel le second élément de verrouillage auxiliaire (42) comprend une partie de butée (47) avec laquelle le premier élément de verrouillage auxiliaire (42) respectif est en butée avec la bague de recouvrement (17) qui est dans la configuration verrouillée et une partie de rampe (46) qui est agencée en amont de la partie de butée (47) le long d'une trajectoire d'avancement du premier élément de verrouillage auxiliaire (42) respectif et qui est configurée pour guider le premier élément de verrouillage auxiliaire (42) afin de venir en butée avec la partie de butée (47).

11. Ensemble de câble électrique (4) comprenant un câble électrique (5) et un connecteur électrique (6) selon l'une quelconque des revendications précédentes.
